# EUROPÄISCHE PATENTSCHRIFT

(11) **EP 4 001 531 B1**
(45) Veröffentlichungstag und Bekanntmachung des Hinweises auf die Patenterteilung: **30.04.2025**
(21) Anmeldenummer: 21207817.4
(22) Anmeldetag: 11.11.2021
(51) Int. Cl.: E04B 1/08, E04B 1/343, E04H 1/12, E04B 1/61, F16B 5/06, F16B 5/00, F16B 5/02, F16B 37/02

(54) **BAUSATZ FÜR EIN GERÄTEHAUS**
KIT FOR A DEVICE HOUSING
ENSEMBLE POUR UNE CABANE À OUTILS

(30) Priorität: 24.11.2020 AT 510212020
(43) Veröffentlichungstag der Anmeldung: 25.05.2022
(73) Patentinhaber: Priglinger Holding GmbH & Co KG, 4120 Neufelden (AT)
(72) Erfinder: Priglinger, Josef, 4040 Linz (AT)
(74) Vertreter: Burgstaller, Peter

(56) Entgegenhaltungen:
- DE-A1- 19 847 070
- DE-A1- 2 707 585
- US-A1- 2003 066 249
- US-A1- 2008 120 937
- US-B1- 7 356 970

## Beschreibung

Die Erfindung betrifft ein Paneel für einen Bausatz für ein Gerätehaus und Gerätehäuser, welche aus dem Bausatz errichtet sind.

Ein Gerätehaus ist ein Gebäude umfassend eine Bodenprofil, Seitenwände und ein Dach, wobei zumindest eine Seitenwand aus den Elementen des erfindungsgemäßen Bausatzes aufgebaut ist.

Als Gerätehaus im Sinn der gegenständlichen Erfindung gelten Gebäude, welche den gegenständlichen Bausatz umfassen, unabhängig vom tatsächlichen Verwendungszweck des Gebäudes. Es wird auf die Eignung des Gebäudes zur Verwendung als Gerätehaus abgestellt.

Gerätehäuser werden meist aus mehreren Fertigelementen aufgebaut, wobei aus einem Bausatz ein Gerätehaus in einer vorgegebenen Dimension errichtbar ist. Die in den Bausätzen verwendeten Elemente sind speziell für diese Bausätze dimensioniert, sodass man in der Fertigung, Planung und Errichtung wenig flexibel ist.

Die DE 3913098 A1 offenbart eine Garage, welche nur aus einer Art von Wandpaneelen zusammengesetzt ist. Zur Bildung der Ecken werden zwei Wandpaneele im Winkel von 90° aneinander befestigt, um einen Steher in Form eines Hohlprofils auszubilden. Bei diesem Aufbau existieren somit keine Eckpaneele. Nachteilig ist, dass die Abkantungen der Wandpaneele eine spezielle Form aufweisen müssen, um im Eckbereich ein Hohlprofil ausbilden zu können.

Auch die DE20015377U1 offenbart eine Garage, welche nur aus einer Art von Wandpaneelen zusammengesetzt ist. Zur Bildung der Ecken werden wieder zwei Wandpaneele im Winkel von 90° aneinander befestigt, wobei dazu ein zusätzliches Winkelprofil notwendig ist, welches innerhalb der beiden Abkantungen vorliegt. Nachteilig ist, dass ein Zusatzelement im Eckbereich benötigt wird, welches den Aufbau verkompliziert und zusätzliche Kosten verursacht.

Die US2003066249A1 offenbart in einer ersten Ausführungsvariante ein Metallgebäude das vier speziell geformte Eckpfeiler aufweist, wobei die beiden seitlichen Längsbereiche des Eckpfeilers ident zueinander vorliegen und die Längsbereiche der Eckpfeiler gegenüber den Längsbereichen der Wandelemente unterschiedlich sind. In einer alternativen Ausführungsvariante wird ein Metallgebäude vorgeschlagen, dessen Eckpfeiler aus zwei Wandpaneelen im Winkel von 90° zueinander gebildet sind.

Die DE19847070A1 betrifft eine Gebäudekonstruktion, insbesondere für Niedrigenergie-Gebäude. Die Wand ist eine Stahlkassettenwand.

Aus der US2008120937A1 ist ferner noch ein Stahlwandsatz mit vielen unterschiedlichen Elementen zur Errichtung eines Gebäudes mit Innenwänden und herkömmlichen Tür und Fensteröffnungen entsprechend einem Wohnhaus offenbart. Der Bausatz der US2008120937A1 eignet sich zur Errichtung eines komplexen Gebäudes.

Die der Erfindung zu Grunde liegende Aufgabe besteht darin, einen verbesserten Aufbau eines Bausatzes für ein Gerätehaus bereit zu stellen.

Für das Lösen der Aufgabe wird ein Bausatz gemäß Anspruch 1 und ein Paneel eines solchen Bausatzes nach Anspruch 12 vorgeschlagen.

In einer Ausführungsvariante wird ein Bausatz umfassend Paneele zur Errichtung zumindest einer Wand eines Gerätehauses vorgeschlagen, wobei der Bausatz zumindest zwei Eckpaneele und zumindest vier Wandpaneele umfasst, wobei sich jedes Paneel mit seiner Längsrichtung über die gesamte Höhe der Wand erstreckt und wobei jedes Paneel zwei unterschiedlich geformte Längsbereiche aufweist, wobei die Längsbereiche als Aufkantungen eines Grundkörpers des jeweiligen Paneels vorliegen und wobei bei Montage der Paneele aneinander eine erste Art der Längsbereiche die zweite Art der Längsbereiche übergreift.

Die Wandpaneele weisen einen geraden Grundkörper auf. Die Eckpaneele weisen einen Knick oder eine Biegung im Grundkörper auf, sodass die Eckpaneele zwei in einem Winkel von 90 Grad zueinander stehende Schenkel aufweisen, welche Schenkel am Ende zwei zueinander unterschiedliche Längsbereiche aufweisen.

Die zwei unterschiedlichen Längsbereiche der Eckpaneele sind ident zu den zwei unterschiedlichen Längsbereichen der Wandpaneele ausgeführt.

Die beiden Längsbereiche der Paneele weisen jeweils eine vom Grundkörper abragende Abwinkelung auf, welche Abwinkelungen zur Innenseite des zu errichtenden Gerätehauses gerichtet sind und jeweils einen Schenkel auf, welcher beabstandet zum Grundkörper winkelig von der Abwinkelung abragt.

Bevorzugt befindet sich bei zwei aneinander montierten Wand- und/oder Eckpaneelen zwischen den übereinanderliegenden unterschiedlich geformten Längsbereichen der beiden Paneele ein Spalt, welcher Spalt nach innen und außen durch jeweils aneinanderliegende Bereiche der beiden übereinanderliegenden unterschiedlich geformten Längsbereiche geschlossen ist. Bevorzugt befindet sind der Spalt zwischen den beiden Abwinkelungen der unterschiedlich geformten Längsbereiche.

Bevorzugt liegt an den Schenkeln jedes Paneels jeweils eine Reihe von Langlöchern vor, wobei die Reihe und die Längsrichtung der Langlöcher in Längsrichtung des Paneels ausgerichtet sind und wobei die Langlöcher eines ersten Paneels und eines am ersten Paneel anschließenden zweiten Paneels übereinanderliegen, sodass eine Öffnung vorliegt, welche durch beide übereinanderliegende Schenkel verläuft.

Bevorzugt wird, dass an einem der Schenkel zwei Montagelöcher vorliegen, welche zur Befestigung an einem Bodenrahmen bzw. Bodenprofil und einem Dachrahmen bzw. Kopfprofil des Gerätehauses dienen, wobei der andere Schenkel Freistellungen aufweist, sodass die Montagelöcher bei Überlappung der Schenkel zweier Paneele freiliegen.

Bevorzugt wird, dass an den Abwinkelungen jeweils zumindest ein Loch vorliegt, wobei die Löcher eines ersten Paneels und eines am ersten Paneel anschließenden zweiten Paneels übereinanderliegen, sodass eine Öffnung vorliegt, welche durch beide aneinanderliegende Abwinkelungen verläuft.

Bei Montage der Paneele aneinander übergreift eine erste Art der Längsbereiche eines ersten Paneels die zweite Art der Längsbereiche eines zweiten Paneels, wobei der übergreifende Längsbereich vom Grundkörper ausgehend eine Abwinkelung aufweist, anschließend an die Abwinkelung einen Vorspannbereich, anschließend an den Vorspannbereich einen Schenkel und anschließend an den Schenkel einen Vorsprung. Der übergriffene Längsbereich weist vom Grundkörper ausgehend eine Abwinkelung auf und anschließend an die Abwinkelung einen Schenkel.

Die Wandpaneele und Eckpaneele sind ident ausgeführt, mit dem Unterschied, dass die Eckpaneele im Bereich ihres Grundkörpers eine 90°-Biegung aufweisen, während der Grundkörper der Wandpaneele gerade verläuft.

Bevorzugt wird, dass der Bausatz vier Eckpaneele, eine Tür, zwei Vorderwandelemente, welche die beiden seitlichen Elemente des Türrahmens bilden, und zumindest fünfzehn Wandpaneele umfasst, wobei der Bausatz optional zumindest ein Lichtpaneel umfassen kann, welches zumindest eines der zumindest fünfzehn Wandpaneele ersetzt.

In einer Ausführungsvariante wird ein Gerätehaus umfassend die Elemente eines erfindungsgemäßen Bausatzes vorgeschlagen, wobei das Gerätehaus zusätzlich zu den Eckpaneelen und Wandpaneelen zumindest folgende Elemente umfasst:
ein Bodenprofil, welches zumindest vier Profilelemente umfasst, wobei die Eckpaneele und Wandpaneele an ihrem unteren Ende am Bodenprofil befestigt sind;
ein Kopfprofil, welches zumindest vier Profilelemente umfasst, wobei die Eckpaneele und Wandpaneele an ihrem oberen Ende am Kopfprofil befestigt sind;
eine Dachplatte, welche zumindest eine Holzplatte umfasst und welche am Kopfprofil befestigt ist;
eine Dachabdichtung, welche über der Holzplatte liegt.

Der Boden des Gerätehauses kann auf verschiedene Weisen vorliegen bzw. errichtet werden, sodass der Bausatz bevorzugt keinen Boden umfasst. Das Gerätehaus kann auf einen bereits errichteten Boden, wie eine verlegte Bodenplatte aus Beton oder auf ein betoniertes Fundament, gestellt werden. Eine zweite Möglichkeit ist ein Erdschraubenfundament, bei welchem ein Bodenaufbau, umfassend das Bodenprofil, mittels Erdschrauben im Untergrund befestigt und bevorzugt auch nivelliert wird. Da in diesem Fall unterhalb des Bodenprofils der Erdboden vorliegt, werden bevorzugt Bodenplatten, insbesondere Aluminiumbodenplatten, am Bodenprofil platziert.

Das Bodenprofil, welches die Wandpaneele und Eckpaneele am unteren Ende verbindet, kann für die Aufstellung des Gerätehauses auf einem bereits errichteten Boden, ohne Verwendung von zusätzlichen Bodenplatten und bei Errichtung auf einem Erdschraubenelement mit Verwendung von zusätzlichen Bodenplatten ident oder unterschiedlich vorliegen, wobei eine idente Ausgestaltung bevorzugt wird, da in diesem Fall das Bodenprofil unabhängig von der Errichtungsart bereits im Bausatz enthalten sein kann. Optional kann das Bodenprofil als getrenntes Zubehörpaket zum Bausatz vorliegen. Das Bodenprofil kann am bereits errichteten Boden, insbesondere Betonboden, mittels Dübeln und Schrauben verankert werden.

Eine besonders bevorzugte Ausführungsvariante der Erfindung wird anhand von Zeichnungen veranschaulicht:
- Fig. 1:: zeigt die Wände eines Gerätehauses in Ansicht von der Seite und in Ansicht von oben.
- Fig. 2:: zeigt eine Wand des Gerätehauses in Ansicht von innen.
- Fig. 3:: zeigt die Verbindung von Wandpaneelen untereinander.
- Fig. 4:: zeigt den Aufbau eines Wandpaneels in drei Ansichten.
- Fig. 5:: zeigt das Profil eines Wandpaneels.
- Fig. 6:: zeigt das Profil eines Eckpaneels.
- Fig. 7:: zeigt einen Rohling für Wandpaneele und Eckpaneele.

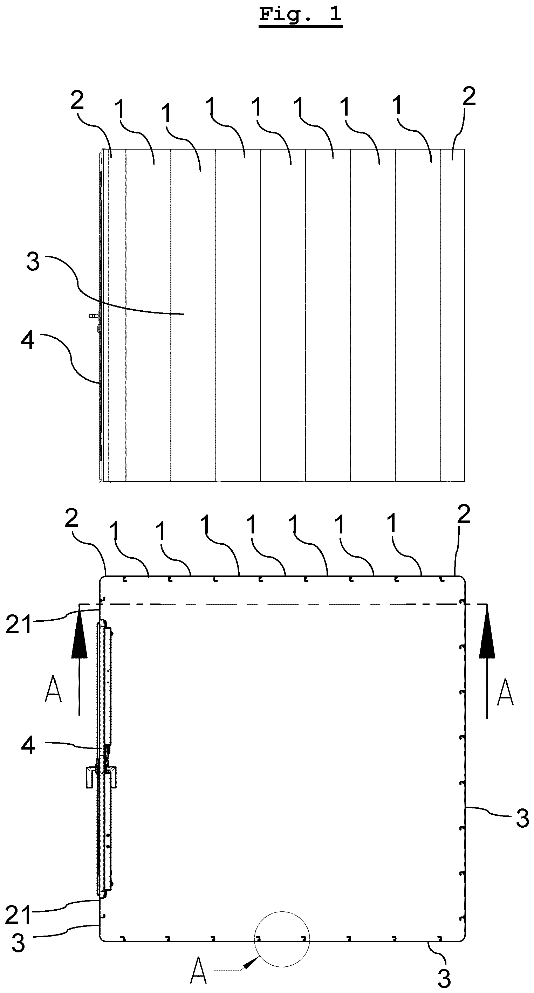

Alle Figuren 1-7 zeigen ein und dieselbe bevorzugte Ausführungsvariante der gegenständlichen Erfindung, wobei idente Bezugszeichen in den Figuren auf idente Merkmale verweisen.

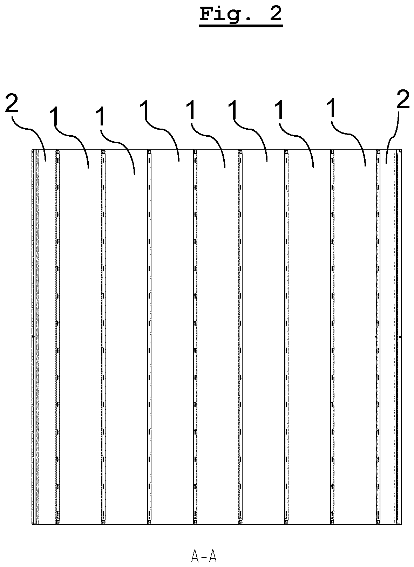

Fig. 1 und 2 zeigen die Wände 3 eines Gerätehauses, welche aus Wandpaneelen 1 und Eckpaneelen 2 zusammengesetzt sind. An einer Wand ist anstelle mehrerer Wandpaneele 1 eine Tür 4 vorgesehen, welche sich bevorzugt über die gesamte Höhe der Wand 3 erstreckt. Die an die Tür 4 anschließenden Vorderwandelemente 21 können unterschiedlich zu den Wandpaneelen 1 ausgeführt sein. Die Tür 4 und die beiden Vorderwandelemente 21 ersetzen eine ganzzahlige Anzahl von Wandpaneelen 1, bevorzugt alle Wandpaneele 1 einer Wand 3, sodass die Vorderwandelemente 21 jeweils mit einem Eckpaneel 2 verbunden werden. Jedes Eckpaneel 2 weist zwei Arten von Längsseiten auf, wie weiter unten erläutert wird. Bevorzugt weist eines der Vorderwandelemente 21 eine Längsseite auf, welche ident zu einer ersten der beiden Arten von Längsseiten der Eckpaneele 2 ausgeführt ist und das zweite der Vorderwandelemente 21 eine Längsseite auf, welche ident zur zweiten der beiden Arten von Längsseiten der Eckpaneele 2 ausgeführt ist.

Bevorzugt sind alle Ecken der Wände 3 durch idente Eckpaneele 2 gebildet. Das Gerätehaus oder ein Bausatz zur Errichtung des Gerätehauses umfasst somit bevorzugt vier idente Eckpaneele 2. Bevorzugt umfasst das Gerätehaus zumindest eine Wand 3, welche vollständig aus identen Wandpaneelen 1 zusammengesetzt ist, bevorzugt aus einer Anzahl von 5 bis 10 identen Wandpaneelen 1, insbesondere wie dargestellt aus 7 Wandpaneelen 1. Bevorzugt weist jede Wand 3 eine Breite von X Wandpaneelen und einem Eckpaneel 2 bzw. zwei halben Eckpaneelen 2 auf, wobei X eine ganze Zahl größer 2, bevorzugt größer 4 ist. Die außen am Gerätehaus sichtbare Breite eines Wandpaneels 1 beträgt bevorzugt zwischen 20 und 40 cm, insbesondere zwischen 25 und 35 cm, besonders bevorzugt 28 cm. Ein Gerätehaus oder ein Bausatz zur Errichtung des Gerätehauses umfasst bevorzugt zumindest 15 idente Wandpaneele 1. Die Wandpaneele 1 und Eckpaneele 2 erstrecken sich bevorzugt jeweils über die gesamte Höhe der Wand 3. Bevorzugt beträgt die Länge der Wandpaneele 1 und Eckpaneele 2 über 180 cm, insbesondere über 200 cm.

Zumindest eines der Wandpaneele 1 kann durch ein Lichtpaneel ersetzt werden (nicht dargestellt). Das Lichtpaneel erstreckt sich über die gesamte Höhe einer Wand und liegt bevorzugt mit der Breite exakt eines Wandpaneels 1 vor. Weniger bevorzugt kann das Lichtpaneel auch eine Breite von X Wandpaneelbreiten aufweisen, wobei X eine ganze Zahl ist. Das Lichtpaneel umfasst eine durchsichtige Scheibe, bevorzugt aus Kunststoff wie Acrylglas oder Polycarbonat, welche an den Längsseiten Mittel zur Befestigung an den Längsseiten zweier Paneele 1, 2 aufweist.

Zur Stabilisierung des Wandaufbaus (nicht dargestellt) weist das Gerätehaus einen unteren Rahmen auf, an welchem die Paneele 1, 2 mit deren unteren Enden verbunden sind und einen oberen Rahmen, mit welchem die Paneele 1, 2 mit deren oberen Enden verbunden sind. Die Rahmen sind bevorzugt jeweils aus vier Profilelementen zusammengesetzt. Zur Verstärkung können zwei gegenüberliegende Profilelemente durch Querverbinder verbunden sein. Der Boden des Gerätehauses ist in einer Ausführungsvariante durch Bodenplatten geschlossen. In einer anderen Ausführungsvariante wird das Gerätehaus mit offener Unterseite auf einem bestehenden Boden, wie beispielsweise zumindest einer Betonplatte, aufgestellt. Das Gerätehaus ist durch ein Dach geschlossen. Bevorzugt umfasst das Dach eine Holzplatte, insbesondere in Form einer Dreischichtplatte, welche umlaufend mit den Profilelementen des Rahmens verbunden ist. Über der Holzplatte liegt eine Abdichtung, insbesondere in Form einer Folie, insbesondere einer EPDM-Folie, vor. Die Holzplatte kann aus mehreren Platten bzw. Brettern vorliegen, welche sich jeweils über die gesamte Länge einer Seite des Gerätehauses erstrecken. Bevorzugt sind die mehreren Platten bzw. Bretter quer zu den Querverbindern des oberen Rahmens angeordnet.

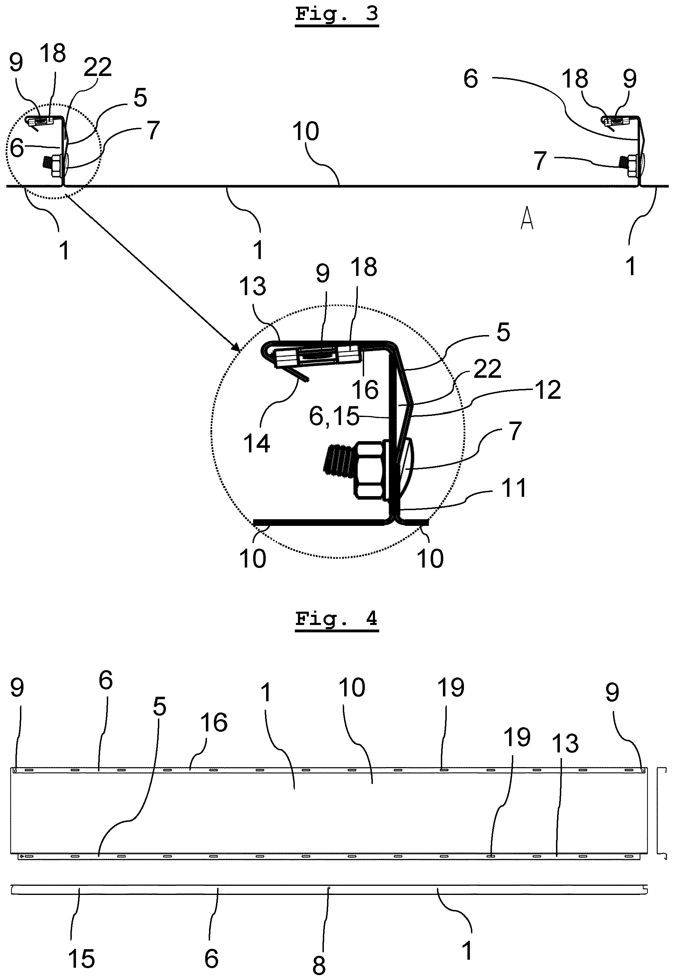

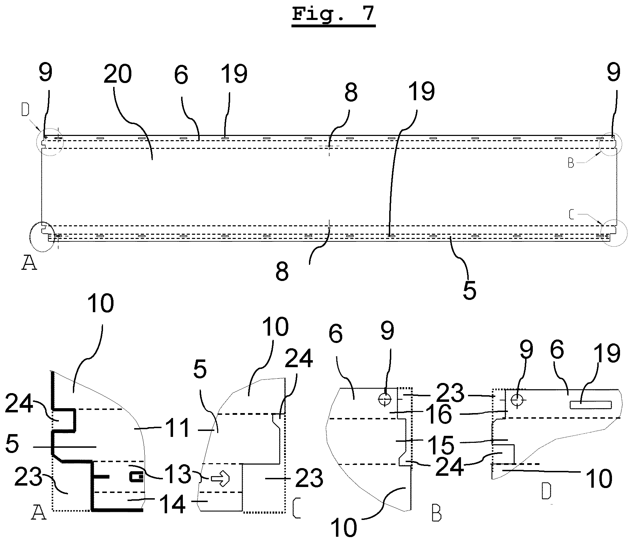

Fig. 3 zeigt die Verbindung der Paneele 1, 2 untereinander am Beispiel von drei Wandpaneelen 1. Jedes Paneel 1, 2 weist zwei unterschiedliche seitliche Längsbereiche auf, welche unterschiedlich geformte Aufkantungen des Materials des Paneels 1, 2 aufweisen. Zur Verbindung der Paneele 1, 2 übergreift eine erste Art eines seitlichen Längsbereichs die zweite Art eines seitlichen Längsbereichs. Die erste Art wird daher im Folgenden als übergreifender Längsbereich 5 und die zweite Art als umgriffener Längsbereich 6 bezeichnet. Jeder der beiden Längsbereiche 5, 6 weist ausgehend vom Grundkörper 10 des Paneels 1, 2 eine erste Abwinkelung auf, welche zum Grundkörper 10 einen Winkel, bevorzugt im Bereich von 70-90 Grad, einschließt und wobei die beiden Abwinkelungen jeweils nach innen, bezogen auf die spätere Anbringung am Gerätehaus, vom Grundkörper 10 abragen. Die beiden übereinanderliegenden Längsbereiche 5, 6 sind bevorzugt mit zumindest einer Schraube 7 verbunden. Diese verläuft durch je ein Loch 8 (bzw. eine Öffnung) der beiden Längsbereiche 5, 6, welches Loch 8, wie in Fig. 7 erkennbar ist, bevorzugt zirka mittig in Längsrichtung des jeweiligen Paneels 1, 2 vorliegt.

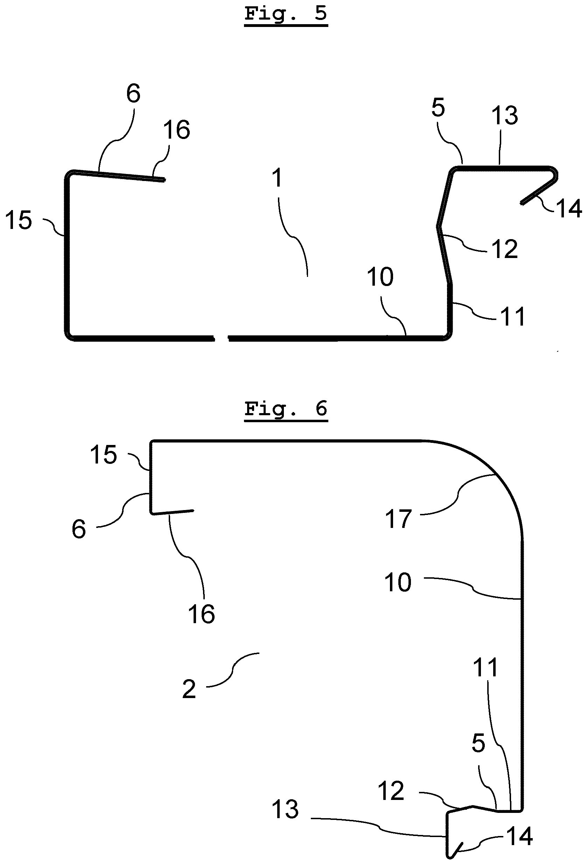

In Fig. 5 und 6 sind die Profile der Paneele 1, 2 dargestellt. Das Eckpaneel 2 ist ident zum Wandpaneel 1 ausgeführt, lediglich mit dem Unterschied, dass das Eckpaneel 2 im Bereich des Grundkörpers 10, bevorzugt mittig am Grundkörper 10, einen Bogen 17 aufweist. Das Eckpaneel 2 wird bevorzugt dadurch hergestellt, dass ein Wandpaneel 1 mittig mit einem 90-Grad Knick oder bevorzugt einem Viertelkreis-Bogen versehen wird. Das Eckpaneel 2 weist somit zwei in einem Winkel von 90 Grad zueinander stehende Schenkel auf, welche am Ende zwei unterschiedliche Längsbereiche 5,6 aufweisen, welche ident zu den Längsbereichen 5,6 der Wandpaneele 1 vorliegen.

Wie in Fig. 5 und 6 erkennbar ist, weist der übergreifende Längsbereich 5 eine an den Grundkörper 10 anschließende Abwinkelung 11 auf, welche einseitig vom Grundkörper 10 abragt und an welche bevorzugt ein Vorspannbereich 12 anschließt. Am Ende des Vorspannbereichs 12 schließt ein Schenkel 13 an, welcher zumindest annähernd parallel zum Grundkörper 10 verläuft. Beim Eckpaneel 2 verläuft der Schenkel 13 zumindest annähernd parallel zu jenem Abschnitt des Grundkörpers 10, an welchem der übergreifende Längsbereich 5 vorliegt. Am Ende des Schenkels 13 verläuft ein Vorsprung 14, schräg in Richtung des Grundkörpers 10 und der Abwinkelung 11. Der Vorsprung 14 kann auch annähernd parallel zum Schenkel 13 in Richtung Vorspannbereich 12 zurück verlaufen. Der Vorspannbereich 12 weist einen Verlauf auf, welcher von der Abwinkelung 11 zunächst schräg vom Grundkörper weg in der dem Schenkel 13 abgewandten Richtung verläuft und danach schräg vom Grundkörper weg in der dem Schenkel 13 zugewandten Richtung verläuft.

Wie in Fig. 5 und 6 erkennbar ist, weist der übergriffene Längsbereich 6 eine an den Grundkörper 10 anschließende Abwinkelung 15 auf, welche einseitig vom Grundkörper 10 abragt. Am Ende der Abwinkelung 15 schließt ein Schenkel 16 an, welcher von der Abwinkelung ausgehend leicht geneigt in Richtung des Grundkörpers 10 verläuft.

Wie in Fig. 3 zu sehen ist, umgreift der übergreifende Längsbereich 5 bei der Montage den übergriffenen Längsbereich 6, wobei der Schenkel 16 in den Winkel zwischen dem Schenkel 13 und dem Vorsprung 14 ragt. Die Ecke zwischen Schenkel 16 und Abwinkelung 15 liegt an der Ecke zwischen Schenkel 13 und Vorspannbereich 12 an. Die beiden Abwinkelungen 11, 15 liegen aneinander an. Zwischen Vorspannbereich 12 und Abwinkelung 15 verbleibt ein Spalt 22. Die Abwinkelung 11 kann anstelle der beiden dargestellten stumpfen Winkel, welche den zuvor beschriebenen Vorspannbereich 12 bilden, auch nur einen stumpfen Winkel zwischen dem Grundkörper 10 und dem Schenkel 13 aufweisen, um einen Spalt 22 zwischen den beiden aneinanderliegenden Abwinkelungen 11, 15 zu erreichen. Alternativ können ein oder mehrere Spalte 22 auch durch eine Profilierung, eine Nut oder einen Vorsprung zumindest einer der beiden Abwinkelungen 11, 15 gebildet sein. Der Spalt 22 zwischen den beiden aneinanderliegenden Abwinkelungen 11, 15 wird bevorzugt, da durch diesen eventuell von außen zwischen den Paneelen 1, 2 eindringender Niederschlag oder Feuchtigkeit im Spalt 22 nach unten ablaufen kann. Weniger bevorzugt kann zwischen den Abwinkelungen 11, 15 oder zwischen den Schenkeln 13, 16 eine Dichtung in Form einer Beschichtung oder eines Dichtelements vorliegen. Der Spalt 22 ist nach innen und außen durch jeweils aneinanderliegende Bereiche der beiden übereinanderliegenden unterschiedlich geformten Längsbereiche 5, 6 geschlossen.

Wie in Fig. 4 zu sehen ist, weisen die beiden Schenkel 13, 16 jeweils eine Reihe von Langlöchern 19 auf, welche an denselben Längspositionen des jeweiligen Paneels 1, 2 bzw. bei allen Paneelen 1, 2 an den selben Längspositionen vorliegen. Bei Montage der Paneele 1, 2 aneinander, liegen die Langlöcher 19 des Schenkels 13 eines ersten Paneels 1, 2 deckungsgleich über den Langlöchern 19 des Schenkels 16 eines zweiten Paneels 1, 2.

Wie in Fig. 2 erkennbar ist, sind die Langlöcher 19 an der Innenseite des Gerätehauses angeordnet, wobei mehrere horizontale Reihen von Langlöchern 19 gebildet werden, an welcher Regalböden oder andere Elemente des Gerätehauses eingehängt werden können. Die Befestigung der Regalböden erfolgt bevorzugt über Blechwinkel mit Blechhaken, welche in die Langlöcher 19 ragen. In den Raum, welcher durch den Grundkörper 10 und die beiden Längsbereiche 5, 6 eingeschlossen ist, kann vorteilhaft ein Wärmedämmelement, insbesondere in Form einer Wärmedämmplatte, insbesondere aus Schaumstoff oder Styropor, platziert werden. Bevorzugt wird über dem jeweiligen Wärmedämmelement eine Innenverkleidung, in Form eines Verkleidungselements, insbesondere Abdeckblechs, platziert, welches Verkleidungselement parallel zum Grundkörper 10 eines Paneels 1, 2 verläuft, wobei das Verkleidungselement in Richtung des Grundkörpers 10 weggebogene Haken, insbesondere Blechhaken, aufweist. Die Haken des Verkleidungselements ragen in die Langlöcher 19, welche beidseits des Grundkörpers 10 verlaufen.

Bevorzugt liegen die Langlöcher 19 in einer Breite vor, dass in einem Langloch 19 zwei Haken, insbesondere Blechhaken, von Verkleidungselementen und ein Haken, insbesondere Blechhaken, eines Blechwinkels des Regalsystems ragen können. Dadurch ist es vorteilhaft möglich beim wärmeisolierten Gerätehaus zwischen angrenzenden Verkleidungselementen weiterhin Elemente in die Langlöcher 19 einzuhängen. Bevorzugt wird für alle Elemente dasselbe Blech bzw. ein einheitlich dickes Blech verwendet, sodass die Breite der Langlöcher 19 bevorzugt zumindest die dreifache Dicke des Grundkörpers 10 des Paneels 1, 2 beträgt.

Wie in Fig. 4 zu erkennen ist, weist zumindest einer der Schenkel 13, 16 Montagelöcher 9 auf, durch welche eine Verschraubung mit den Rahmenelementen des Bodenprofils und der Decke bzw. des Kopfprofils des Gerätehauses erfolgt. Wie dargestellt, können beide Montagelöcher 9 am selben Schenkel 13, 16 vorliegen und der andere Schenkel 13, 16 im Bereich der Montagelöcher 9 eine Freistellung bzw. Ausstanzung aufweisen, um bei Übergreifen der Längsbereiche 5, 6 das Montageloch 9 nicht zu verdecken. Wie in Fig. 3 ersichtlich ist, wird vor Montage eine Klemmmutter 18 (auch als Schnappmutter oder Blechmutter bezeichnet) am Schenkel 13, 16 am jeweiligen Montageloch 9 platziert. Wie dargestellt, können beide Montagelöcher 9 am Schenkel 16 des übergriffenen Längsbereichs 6 vorliegen und der Schenkel 13 Aussparungen aufweisen, wie in den Detailansichten B, C, D der Fig. 7 gut ersichtlich ist. Die Aussparungen im Bereich der Montagelöcher 9 ermöglichen das Platzieren der Klemmmutter 18, sodass diese nicht über die untere oder obere Kante des Paneels 1, 2 hinab oder empor ragt.

Fig. 7 veranschaulicht den Rohling 20, aus welchem sowohl Wandpaneele 1 als auch Eckpaneele 2 gefertigt werden. Als Ausgangsbasis für den Rohling 20 dient ein rechteckiger Blechstreifen, welcher bevorzugt durch Stanzen mit den Langlöchern 19 und den Aussparungen bzw. Freistellungen in den Eckbereichen versehen wird. Die Löcher 8, 9 können durch Stanzen oder Bohren erzeugt werden, wobei diese rund oder in anderer Form (beispielsweise als Rechteck) vorliegen können. Die Langlöcher 19 liegen wie dargestellt bevorzugt als Rechtecke vor (nicht oval).

Zur Herstellung der Wandpaneele 1 wird der Rohling 20 in den Längsbereichen mehrmals gebogen, um die Längsbereiche 5, 6 gemäß den Fig. 5 und 6 zu bilden. Zur Herstellung der Eckpaneele 2 werden Wandpaneele 1 mittig gebogen. In einer anderen Ausführungsvariante können sich die Eckpaneele 2 und Wandpaneele 1 unterscheiden, wobei deren Rohlinge 20 bevorzugt in weiten Teilen bei deren Herstellung ident bearbeitet werden. Bevorzugt weisen deren Rohlinge 20 dieselben Abmessungen (Länge und Breite und Materialstärke) auf. Bevorzugt sind deren Rohlinge 20 mit identen Langlöchern 19 (Positionen und Größe) versehen. Bevorzugt sind deren Rohlinge 20 mit identen Löchern 8, 9 (Positionen und Größe) versehen. Bevorzugt unterscheiden sich deren Rohlinge 20 durch die Aussparungen bzw. Freistellungen in den Eckbereichen und/oder dadurch, dass die Rohlinge 20 der Eckpaneele 2 zusätzliche Aussparungen bzw. Freistellungen, insbesondere in Form von Ausstanzungen, aufweisen.

Bevorzugte Ausführungsvarianten der vier Eckbereiche A, B, C, D sind in den Detailansichten der Fig. 7 nicht maßstabsgetreu veranschaulicht. Die untere Seite der Paneele 1, 2, welche dem Boden des Gerätehauses zugewandt liegt, weist die Eckbereiche B, C auf. Die obere Seite der Paneele 1, 2, welche dem Dach des Gerätehauses zugewandt liegt, weist die Eckbereiche A, D auf. A und C sind die Freistellungen des übergreifenden Längsbereichs 5. B und D sind die Freistellungen des übergriffenen Längsbereichs 6. Punktiert sind die ursprünglichen Ecken des rechteckigen Ausgangsmaterials vor dem Stanzen der Freistellungen dargestellt. Strichliert sind die ungefähren Lagen der Faltlinien der beiden Längsbereiche 5, 6 veranschaulicht. Wie dargestellt ist zumindest eine der Freistellungen A oder C, bevorzugt beide Freistellungen A und C, so ausgeführt, dass der Schenkel 13 und der Vorsprung 14 zur Gänze einen Abstand zur unteren und/oder oberen Kante des Grundkörpers 10 aufweisen, indem diese mit einer äußeren Freistellung 23 versehen sind. Wie dargestellt, ist zumindest eine der Freistellungen B oder D, bevorzugt beide Freistellungen B und D, so ausgeführt, dass der Schenkel 16 zur Gänze einen Abstand zur unteren und/oder oberen Kante des Grundkörpers 10 aufweist, indem diese mit einer äußeren Freistellung 23 versehen sind. Wie dargestellt, ist zumindest eine der Freistellungen A oder D, bevorzugt beide Freistellungen A und D, so ausgeführt, dass am unteren Ende ein oder bevorzugt beide Längsbereiche 5, 6 zur Gänze einen Abstand zur unteren Kante des Grundkörpers 10 aufweisen.

Wie dargestellt, ist zumindest eine der Freistellungen A, B, C oder D, bevorzugt alle Freistellungen A, B, C und D, so ausgeführt, dass im Bereich der Faltlinie zwischen dem Grundkörper und der Abwinkelung 11, 15 eine innere Freistellung 24 der Abwinkelung 11, 15 vorliegt, welche gegenüber dem an diese innere Freistellung 24 vom Grundkörper 10 abgewandt anschließenden Bereich weiter zur Mitte (in Richtung der Löcher 8) ragt. Der Bereich zwischen den Freistellungen 23, 24 kann bei den Bereichen A und D ohne Freistellung vorliegen, also bündig zur oberen Kante des Grundkörpers 10. Die äußere Freistellung 23 der Eckbereiche A und C weist bevorzugt ein größeres Ausmaß in Längsrichtung des Paneels 1, 2 auf, als deren innere Freistellung 24.

Durch das modulare System wird erreicht, dass Gerätehäuser in beliebiger Dimension, also einer beliebigen Länge und Breite, jeweils als X-Faches der Breite der Wandpaneele 1 zuzüglich der Breite zweier Eckpaneele 2, planbar und errichtbar sind.

Wichtig zu erwähnen ist, dass das Gerätehaus allein durch die Wandpaneele 1 und Eckpaneele 2 einen stabilen Wandaufbau erhält. Die Wandpaneele 1 und Eckpaneele 2 haben daher eine tragende Funktion und unterscheiden sich schon allein dadurch von Fassadenelementen oder anderen Vertäfelungen, welche an tragenden Strukturen von Gebäuden angebracht werden.

An den Vorderwandelementen 21 werden bevorzugt Türanschlagprofile befestigt, welche als Stahlprofile mit größerer Dicke vorliegen, um dem Gerätehaus im Bereich um die Tür 4 Stabilität zu verleihen. An zumindest einem der Vorderwandelemente oder dessen Türanschlagprofil befindet sich ein Türgelenk, insbesondere in Form von Türangeln. Bevorzugt befindet sich an jedem der beiden Vorderwandelemente oder deren Türanschlagprofil ein Türgelenk, insbesondere in Form von Türangeln, zur Bildung einer Doppeltür. Weniger bevorzugt kann sich am zweiten Vorderwandelement oder dessen Türanschlagprofil ein Schließblech befinden.

## Patentansprüche

1. Bausatz umfassend Paneele (1,2) zur Errichtung zumindest einer Wand (3) eines Gerätehauses,
wobei der Bausatz zumindest zwei Eckpaneele (2) und zumindest zwei Wandpaneele (1) umfasst, wobei sich jedes Paneel (1, 2) mit seiner Längsrichtung über die gesamte Höhe der Wand (3) erstreckt und wobei jedes Paneel (1, 2) eine erste Art von Längsbereich (5) und eine zweite Art von Längsbereich (6) aufweist, welche unterschiedlich zueinander geformt sind, wobei die Längsbereiche (5, 6) als Aufkantungen eines Grundkörpers (10) des jeweiligen Paneels (1, 2) vorliegen, wobei die beiden Längsbereiche (5, 6) des Paneels (1, 2) jeweils eine vom Grundkörper (10) abragende Abwinkelung (11, 15) aufweisen, welche Abwinkelungen (11, 15) zur Innenseite des zu errichtenden Gerätehauses gerichtet sind und jeweils einen Schenkel (13, 16) aufweisen, welcher beabstandet zum Grundkörper (10) winkelig von der Abwinkelung (11, 15) abragt, und wobei bei Montage der Paneele (1, 2) aneinander die erste Art der Längsbereiche (5) die zweite Art der Längsbereiche (6) übergreift, wobei der übergreifende Längsbereich (5) vom Grundkörper (10) ausgehend die Abwinkelung (11) aufweist und anschließend an die Abwinkelung (11) den Schenkel (13) und anschließend an den Schenkel (13) einen Vorsprung (14), wobei ein Vorspannbereich (12) zwischen der Abwinkelung (11) und dem Schenkel (13) vorliegt, wobei der Vorsprung (14) schräg in Richtung des Grundkörpers (10) und der Abwinkelung (11) verläuft und wobei die zwei unterschiedlichen Längsbereiche (5, 6) der Eckpaneele (2) ident zu den zwei unterschiedlichen Längsbereichen (5, 6) der Wandpaneele (1) ausgeführt sind, wobei die Wandpaneele (1) einen geraden Grundkörper (1) aufweisen und die Eckpaneele (2) mittig einen Knick oder eine Biegung im Grundkörper aufweisen, sodass die Eckpaneele (2) zwei in einem Winkel von 90 Grad zueinander stehende Schenkel aufweisen, welche Schenkel am Ende zwei zueinander unterschiedliche Längsbereiche (5, 6) aufweisen.

2. Bausatz nach Anspruch 1, **dadurch gekennzeichnet, dass** sich bei zwei aneinander montierten Wandpaneelen (1) und/oder Eckpaneelen (2) zwischen den übereinanderliegenden unterschiedlich geformten Längsbereichen (5, 6) der beiden Paneele (1, 2) ein Spalt (22) befindet, welcher Spalt (22) nach innen und außen durch jeweils aneinanderliegende Bereiche der beiden übereinanderliegenden unterschiedlich geformten Längsbereiche (5, 6) geschlossen ist.

3. Bausatz nach einem der Ansprüche 1 oder 2, **dadurch gekennzeichnet, dass** jeder der beiden Längsbereiche (5, 6) an jedem der vier Eckbereiche des Paneels (1, 2) eine innere Freistellung (24) aufweist, sodass der an den Grundkörper (10) anschließende Bereich der beiden Längsbereiche (5, 6) mit Abstand zur oberen und unteren Kante des Grundkörpers (10) vorliegt.

4. Bausatz nach einem der Ansprüche 1 bis 3, **dadurch gekennzeichnet, dass** an den Schenkeln (13, 16) jeweils eine Reihe von Langlöchern (19) vorliegt, wobei die Reihe und die Längsrichtung der Langlöcher (19) in Längsrichtung des Paneels (1, 2) ausgerichtet sind und wobei die Langlöcher (19) eines ersten Paneels (1, 2) und eines am ersten Paneel (1, 2) anschließenden zweiten Paneels (1, 2) übereinanderliegen, sodass eine Reihe von Öffnungen vorliegt, welche Öffnungen durch beide übereinanderliegende Schenkel (13, 16) verlaufen.

5. Bausatz nach einem der Ansprüche 1 bis 4, **dadurch gekennzeichnet, dass** an einem der Schenkel (13, 16) zwei Montagelöcher (9) vorliegen, welche zur Befestigung an einem Bodenprofil und einem Kopfprofil des Gerätehauses dienen, wobei der andere Schenkel (13, 16) eine Freistellung aufweist, sodass die Montagelöcher (9) bei Überlappung der Schenkel (13, 16) freiliegen.

6. Bausatz nach einem der Ansprüche 1 bis 5, **dadurch gekennzeichnet, dass** an den Abwinkelungen (11, 15) jeweils zumindest ein Loch (8) vorliegt, wobei die Löcher (8) eines ersten Paneels (1, 2) und eines am ersten Paneel (1, 2) anschließenden zweiten Paneels (1, 2) übereinanderliegen, sodass eine Öffnung vorliegt, welche durch beide aneinanderliegende Abwinkelungen (11, 15) verläuft.

7. Bausatz nach Anspruch 1, **dadurch gekennzeichnet, dass** der Schenkel (13) und der Vorsprung (14) an beiden Enden des Paneels (1, 2) eine äußere Freistellung (23) aufweisen.

8. Bausatz nach einem der Ansprüche 1 bis 7, **dadurch gekennzeichnet, dass** der Vorspannbereich (12) einen Verlauf aufweist, welcher von der Abwinkelung (11) zunächst schräg vom Grundkörper weg in der dem Schenkel (13) abgewandten Richtung verläuft und danach schräg vom Grundkörper weg in der dem Schenkel (13) zugewandten Richtung verläuft.

9. Bausatz nach einem der Ansprüche 1 bis 8, **dadurch gekennzeichnet, dass** wobei bei Montage der Paneele (1, 2) aneinander der Schenkel (16) in den Winkel zwischen dem Schenkel (13) und dem Vorsprung (14) ragt, wobei die Ecke zwischen Schenkel (16) und Abwinkelung (15) an der Ecke zwischen Schenkel (13) und Vorspannbereich (12) anliegt, die beiden Abwinkelungen (11, 15) aneinander anliegen und zwischen Vorspannbereich (12) und Abwinkelung (15) ein Spalt (22) verbleibt.

10. Bausatz nach einem der Ansprüche 1 bis 9, **dadurch gekennzeichnet, dass** dieser vier Eckpaneele (2), zumindest eine Tür (4), zwei Vorderwandelemente (21), welche die beiden seitlichen Elemente des Türrahmens bilden und zumindest fünfzehn Wandpaneele (1) umfasst, wobei der Bausatz optional zumindest ein Lichtpaneel umfassen kann, welches zumindest eines der zumindest fünfzehn Wandpaneele (1) ersetzt.

11. Gerätehaus umfassend die Elemente eines Bausatzes gemäß einem der Ansprüche 1 bis 10, **dadurch gekennzeichnet, dass** dieses zusätzlich zu Eckpaneelen (2) und Wandpaneelen (1) zumindest folgende Elemente umfasst:
ein Bodenprofil, welches zumindest vier Profilelemente umfasst, wobei die Eckpaneele (2) und Wandpaneele (1) an ihrem unteren Ende am Bodenprofil befestigt sind;
ein Kopfprofil, welches zumindest vier Profilelemente umfasst, wobei die Eckpaneele (2) und Wandpaneele (1) an ihrem oberen Ende am Kopfprofil befestigt sind;
eine Dachplatte, welche zumindest eine Holzplatte umfasst und welche am Kopfprofil befestigt ist;
eine Dachabdichtung, welche über der Holzplatte vorliegt.

12. Paneel (1, 2) eines Bausatzes zur Errichtung zumindest einer Wand (3) eines Gerätehauses, wobei sich das Paneel (1, 2) mit seiner Längsrichtung über die Höhe der Wand (3) erstreckt und wobei das Paneel (1, 2) eine erste Art von Längsbereich (5) und eine zweite Art von Längsbereich (6) aufweist, welche unterschiedlich zueinander geformt sind, wobei beide Längsbereiche (5, 6) als Aufkantungen eines Grundkörpers (10) des Paneels (1, 2) vorliegen und wobei bei Montage mehrerer solcher identer Paneele (1, 2) aneinander die erste Art der Längsbereiche (5) die zweite Art der Längsbereiche (6) übergreift, wobei die beiden Längsbereiche (5, 6) des Paneels (1, 2) jeweils eine vom Grundkörper (10) abragende Abwinkelung (11, 15) aufweisen, welche Abwinkelungen (11, 15) zur Innenseite des zu errichtenden Gerätehauses gerichtet sind und jeweils einen Schenkel (13, 16) aufweisen, welcher beabstandet zum Grundkörper (10) winkelig von der Abwinkelung (11, 15) abragt, wobei ein Längsbereich (5) bei Montage der Paneele (1) den anderen Längsbereich (6) übergreift, wobei der übergreifende Längsbereich (5) vom Grundkörper (10) ausgehend eine Abwinkelung (11) aufweist und anschließend an die Abwinkelung (11) einen Schenkel (13) und anschließend an den Schenkel (13) einen Vorsprung (14), wobei ein Vorspannbereich (12) zwischen der Abwinkelung (11) und dem Schenkel (13) vorliegt, wobei der Vorsprung (14) schräg in Richtung des Grundkörpers (10) und der Abwinkelung (11) verläuft.

13. Paneel (1, 2) nach Anspruch 12, **dadurch gekennzeichnet, dass** der Vorspannbereich (12) einen Verlauf aufweist, welcher von der Abwinkelung (11) zunächst schräg vom Grundkörper weg in der dem Schenkel (13) abgewandten Richtung verläuft und danach schräg vom Grundkörper weg in der dem Schenkel (13) zugewandten Richtung verläuft.

14. Paneel (1, 2) nach einem der Ansprüche 12 bis 13, **dadurch gekennzeichnet, dass** bei Montage von zwei Paneelen (1, 2) aneinander der Schenkel (16) des übergriffenen Längsbereichs (6) in den Winkel zwischen dem Schenkel (13) und dem Vorsprung (14) ragt, wobei die Ecke zwischen Schenkel (16) und Abwinkelung (15) an der Ecke zwischen Schenkel (13) und Vorspannbereich (12) anliegt, die beiden Abwinkelungen (11, 15) aneinander anliegen und zwischen Vorspannbereich (12) und Abwinkelung (15) ein Spalt (22) verbleibt.

## Claims

1. An assembly kit comprising panels (1, 2) for erecting at least one wall (3) of an appliance building, the assembly kit comprising at least two corner panels (2) and at least two wall panels (1), wherein each panel (1, 2) longitudinally extends across the entire height of the wall (3) and wherein each panel (1, 2) has a first type of longitudinal region (5) and a second type of longitudinal region (6), which are shaped differently with respect to one another, wherein the longitudinal regions (5, 6) are present as upstands of a base body (10) of the respective panel (1, 2), wherein the two longitudinal regions (5, 6) of the panel (1, 2) each have an angulation (11, 15) projecting off the base body (10), which angulations (11, 15) are oriented towards the inside of the appliance building to be erected and each have a leg (13, 16), which angularly projects off the angulation (11, 15) at a distance from the base body (10), and wherein, when the panels (1, 2) are mounted to one another, the first type of longitudinal regions (5) overlaps the second type of longitudinal regions (6), wherein the overlapping longitudinal region (5) has the angulation (11) off the base body (10) as well as the leg (13) adjoining the angulation (11) and a protrusion (14) adjoining the leg (13), wherein a pre-tensioning region (12) is present between the angulation (11) and the leg (13), wherein the protrusion (14) runs obliquely towards the base body (10) and the angulation (11), and wherein the two different longitudinal regions (5, 6) of the corner panels (2) are made to be identical to the two different longitudinal regions (5, 6) of the wall panels (1), wherein the wall panels (1) have a straight base body (1) and the corner panels (2) have a kink or bend in the base body, so that the corner panels (2) have two legs forming a 90° angle, which legs have two longitudinal regions (5, 6) different from one another on their ends.

2. The assembly kit of claim 1, **characterised in that**, when two wall panels (1) and/or corner panels (2) are mounted to one another, a gap (22) exists between the overlaying, differently shaped longitudinal regions (5, 6) of the two panels (1, 2), which gap (22) is closed towards the inside and the outside by respectively contiguous regions of the two overlaying, differently shaped longitudinal regions (5, 6).

3. The assembly kit of any one of claims 1 and 2, **characterised in that** each of the two longitudinal regions (5, 6) has an interior recess (24) in each of the four corner regions of the panel (1, 2), so that the region of the two longitudinal regions (5, 6) that adjoins the base body (10) is spaced apart from the upper and lower edges of the base body (10).

4. The assembly kit of any one of claims 1 to 3, **characterised in that** a row of oblong holes (19) is present on each of the legs (13, 16), wherein the row and the longitudinal direction of the oblong holes (19) are oriented in the longitudinal direction of the panel (1, 2) and wherein the oblong holes (19) of a first panel (1, 2) and of a second panel (1, 2) adjoining the first panel (1, 2) overlay one another, so that a row of openings is present, which openings run through both overlaying legs (13, 16).

5. The assembly kit of any one of claims 1 to 4, **characterised in that** two mount holes (9) are present on either of the legs (13, 16), which mount holes serve to be attached to a top tread and a bottom tread of an appliance building, wherein the respective other leg (13, 16) has a recess, so that the mount holes (9) are exposed when the legs (13, 16) overlap.

6. The assembly kit of any one of claims 1 to 5, **characterised in that** at least one hole (8) is present on each of the angulations (11, 15), wherein the holes (8) of a first panel (1, 2) and those of a second panel (1, 2) adjoining the first panel (1, 2) overlay one another, so that an opening which runs through both adjoining angulations (11, 15) is present.

7. The assembly kit of claim 1, **characterised in that** the leg (13) and the protrusion (14) have an exterior recess (23) on both ends of the panel (1, 2).

8. The assembly kit of any one of claims 1 to 7, **characterised in that** the pre-tensioning region (12) has a course which from the angulation (11) first runs obliquely away from the base body in the direction facing away from the leg (13) and then runs obliquely away from the base body in the direction facing the leg (13).

9. The assembly kit of any one of claims 1 to 8, **characterised in that**, when the panels (1, 2) are mounted to one another, the leg (16) projects into the angle between the leg (13) and the protrusion (14), wherein the corner between leg (16) and angulation (15) is contiguous with the corner between leg (13) and pre-tensioning region (12), the two angulations (11, 15) are contiguous with one another and a gap (22) remains between pre-tensioning region (12) and angulation (15).

10. The assembly kit of any one of claims 1 to 9, **characterised in that** it comprises four corner panels (2), at least one door (4), two front wall elements (21), which form the two side elements of the door frame, and at least fifteen wall panels (1), wherein the assembly kit may optionally comprise at least one light panel, which replaces at least one of the at least fifteen wall panels (1).

11. An appliance building comprising the elements of an assembly kit according to any one of claims 1 to 10, **characterised in that** it comprises the following elements in addition to corner panels (2) and wall panels (1):
a bottom tread, which comprises at least four tread elements, wherein the corner panels (2) and the wall panels (1) are attached to the bottom tread on their lower ends;
a top tread, which comprises at least four tread elements, wherein the corner panels (2) and the wall panels (1) are attached to the top tread on their top ends;
a roof slab, which comprises at least one wood slab and which is attached to the top tread;
a roof insulation, which is present above the wood.

12. A panel (1, 2) of an assembly kit for erecting at least one wall (3) of an appliance building, wherein the panel (1, 2) longitudinally extends across the entire height of the wall (3) and wherein the panel (1, 2) has a first type of longitudinal region (5) and a second type of longitudinal region (6), which are shaped differently with respect to one another, wherein the longitudinal regions (5, 6) are present as upstands of a base body (10) of the panel (1, 2), and wherein, when several such identical panels (1, 2) are mounted to one another, the first type of longitudinal regions (5) overlaps the second type of longitudinal regions (6), wherein the two longitudinal regions (5, 6) of the panel (1, 2) each have an angulation (11, 15) projecting off the base body (10), which angulations (11, 15) are oriented towards the inside of the appliance building to be erected and each have a leg (13, 16), which angularly projects off the angulation (11, 15) at a distance from the base body (10), wherein, when the panels (1) are mounted, one longitudinal region (5) overlaps the other longitudinal region (6), wherein the overlapping longitudinal region (5) has an angulation (11) off the base body (10) as well as a leg (13) adjoining the angulation (11) and a protrusion (14) adjoining the leg (13), wherein a pre-tensioning region (12) is present between the angulation (11) and the leg (13), wherein the protrusion (14) runs obliquely towards the base body (10) and the angulation (11).

13. The panel (1, 2) of claim 12, **characterised in that** the pre-tensioning region (12) has a course which from the angulation (11) first runs obliquely away from the base body in the direction facing away from the leg (13) and then runs obliquely away from the base body in the direction facing the leg (13).

14. The panel (1, 2) of any one of claims 12 and 13, **characterised in that**, when two panels (1, 2) are mounted to one another, the leg (16) of the overlapped longitudinal region (6) projects into the angle between the leg (13) and the protrusion (14), wherein the corner between leg (16) and angulation (15) is contiguous with the corner between leg (13) and pre-tensioning region (12), the two angulations (11, 15) are contiguous with one another and a gap (22) remains between pre-tensioning region (12) and angulation (15).

## Revendications

1. Kit de construction comprenant des panneaux (1, 2) pour la construction d'au moins une paroi (3) d'un abri de jardin, le kit comprenant au moins deux panneaux d'angle (2) et au moins deux panneaux de paroi (1), chaque panneau (1, 2) s'étendant avec sa direction longitudinale sur toute la hauteur de la paroi (3) et chaque panneau (1, 2) présentant un premier type de zone longitudinale (5) et un deuxième type de zone longitudinale (6) qui sont formés différemment l'un par rapport à l'autre, les zones longitudinales (5, 6) étant conçues comme les relevés d'un corps de base (3) du panneau respectif (1, 2), les deux zones longitudinales (5, 6) du panneau (1, 2) présentent chacune un coude (11, 15) dépassant du corps de base (10), lesquels coudes (11, 15) sont orientés vers le côté intérieur de l'abri de jardin à construire (10) et présentent chacun une branche (13, 16), qui est écartée du corps des base (10) et dépasse du coude (11, 15) de manière angulaire, et dans lequel, lors du montage des panneaux (1, 2) l'un sur l'autre, le premier type de zone longitudinale (5) chevauche le deuxième type de zone longitudinale (6), la zone longitudinale (5) chevauchante présentant un coude (11) dépassant du corps de base (10) et, aboutant au coude (11), la branche (13) et aboutant à la branche (13) une saillie (14), une zone de précontrainte (12) étant présente entre le coude (11) et la branche (13), la saillie (14) s'étendant obliquement en direction du corps de base (10) et du coude (11) et les deux zones longitudinales différentes (5, 6) des panneaux d'angle (2) sont identiques aux deux zones longitudinales différentes (5, 6) des panneaux de paroi (1), les panneaux de paroi (1) ayant un corps de base droit et les panneaux d'angle (2) présentant au centre un pli ou une courbure dans le corps de base, de sorte que les panneaux d'angle (2) présentent deux branches formant un angle de 90 degrés l'une par rapport à l'autre, lesquelles branches présentent à l'extrémité deux zones longitudinales (5, 6) différentes l'une de l'autre.

2. Kit de construction selon la revendication 1, **caractérisé en ce que**, si deux panneaux de paroi (1) et/ou de deux panneaux d'angle (2) sont montés l'un contre l'autre, il y a un espace (22) entre les deux zones longitudinales (5, 6) de formes différentes des deux panneaux (1, 2), lequel espace (22) est fermé vers l'intérieur et vers l'extérieur par des zones adjacentes respectives des deux zones longitudinales (5, 6) de formes différentes superposées.

3. Kit de construction selon l'une des revendications 1 ou 2, **caractérisé en ce que** chacune des deux zones longitudinales (5, 6) présente un espacement intérieur (24) au niveau de chacune des quatre zones d'angle du panneau (1, 2), de sorte que la zone des deux zones longitudinales (5, 6) adjacente au corps de base (10) est écartée des bords supérieur et inférieur du corps de base (10).

4. Kit de construction selon l'une des revendications 1 à 3, **caractérisé en ce qu'**une rangée de trous oblongs (19) est présente sur chacune des branches (13, 16), la rangée et la direction longitudinale des trous oblongs (19) étant orientées dans la direction longitudinale du panneau (1, 2), et les trous oblongs (19) d'un premier panneau (1, 2) et d'un deuxième panneau (1, 2) aboutant au premier panneau (1, 2) sont superposés, de sorte qu'il existe une série d'ouvertures, lesquelles ouvertures s'étendent à travers les deux branches (13, 16) superposées.

5. Kit de construction selon l'une des revendications 1 à 4, **caractérisé en ce que** deux trous de montage (9), qui servent à la fixation sur un profilé inférieur et un profilé supérieur de l'abri de jardin, sont présents sur l'une des branches (13, 16), l'autre branche (13, 16) présentant un écartement de sorte que les trous de montage (9) sont dégagés lorsque les branches (13, 16) se chevauchent.

6. Kit de construction selon l'une des revendications 1 à 5, **caractérisé en ce qu'**au moins un trou (8) est présent sur chacune des coudes (11, 15), les trous d'un premier panneau (1, 2) et d'un deuxième panneau (1, 2) aboutant au premier panneau (1, 2) sont superposés, de sorte qu'il existe une ouverture qui passe par les deux coudes (11, 15) adjacents.

7. Kit de construction selon la revendication 1, **caractérisé en ce que** la branche (13) et la saillie (14) présentent un écartement extérieur (23) aux deux extrémités du panneau (1, 2).

8. Kit de construction selon l'une des revendications 1 à 7, **caractérisé en ce que** la zone de précontrainte (12) s'étend de manière que, à partir de l'angle (11), elle est d'abord inclinée en s'éloignant du corps de base dans la direction opposée à la branche (13) et en s'éloignant du corps de base dans la direction tournée vers la branche (13).

9. Kit de construction selon l'une des revendications 1 à 8, **caractérisé en ce que**, lors du montage des panneaux (1, 2) l'un sur l'autre, la branche (16) dépasse dans l'angle entre la branche (13) et la saillie (14), l'angle entre la branche (16) et le coude (15) s'appuyant sur l'angle entre la branche (13) et la zone de précontrainte (12), les deux coudes (11, 15) s'appuyant l'un sur l'autre et un espace (22) subsistant entre la zone de précontrainte (12) et le coude (15).

10. Kit de construction selon l'une des revendications 1 à 9, **caractérisé en ce qu'**il comprend quatre panneaux d'angle (2), au moins une porte (4), deux éléments de paroi avant (21) formant les deux éléments latéraux de l'encadrement de porte et au moins quinze panneaux de paroi (1), ledit kit de construction pouvant optionnellement comprendre au moins un panneau lumineux remplaçant au moins un desdits au moins quinze panneaux de paroi (1).

11. Abri de jardin comprenant les éléments d'un kit de construction selon l'une des revendications 1 à 10, **caractérisé en ce qu'**il comprend, en plus des panneaux d'angle (2) et des panneaux muraux (1), au moins les éléments suivants :
un profilé inférieur comprenant au moins quatre éléments de profilé, les panneaux d'angle (2) et les panneaux de paroi (1) étant fixés à leur extrémité inférieure au profilé inférieur ;
un profilé supérieur comprenant au moins quatre éléments de profilé, les panneaux d'angle (2) et les panneaux de paroi (1) étant fixés à leur extrémité supérieure au profilé supérieur ;
un panneau de toit qui comprend au moins un panneau de bois et est fixé au profilé supérieur ;
une isolation de toiture présente au-dessus du panneau de bois.

12. Panneau (1, 2) d'un kit de construction pour la construction d'au moins une paroi (3) d'un abri de jardin, le panneau (1, 2) s'étendant avec sa direction longitudinale sur la hauteur de la paroi (3) et le panneau (1, 2) présentant un premier type de zone longitudinale (5) et un deuxième type de zone longitudinale (6) qui sont formés différemment l'un par rapport à l'autre, les deux zones longitudinales (5, 6) étant conçues comme les relevés d'un corps de base (3) du panneau (1, 2), et lors du montage de plusieurs panneaux identiques (1, 2) l'un sur l'autre, le premier type de zones longitudinales (5) chevauche le deuxième type de zones longitudinales (6), les deux zones longitudinales (5, 6) du panneau (1, 1) présentent chacune un coude (11, 15) dépassant du corps de base (10), lesquels coudes (11, 15) sont orientés vers le côté intérieur de l'abri de jardin à construire (10) et présentent chacun une branche (13, 16), qui est écartée du corps des base (10) et dépasse du coude (11, 15) de manière angulaire, et dans lequel, lors du montage des panneaux (1, 2) l'un sur l'autre, une zone longitudinale (5) chevauche l'autre zone longitudinale (6), la zone longitudinale (6) chevauchante présentant un coude (11) dépassant du corps de base (10) et, aboutant au coude (11), la branche (13) et aboutant à la branche (13) une saillie (14), une zone de précontrainte (12) étant présente entre le coude (11) et la branche (13), la saillie (14) s'étendant obliquement en direction du corps de base (10) et du coude (11).

13. Panneau (1, 2) selon la revendication 12, **caractérisé en ce que** la zone de précontrainte (12) s'étend de manière que, à partir de l'angle (11), elle est d'abord inclinée en s'éloignant du corps de base dans la direction opposée à la branche (13) et en s'éloignant du corps de base dans la direction tournée vers la branche (13).

14. Panneau (1, 2) selon l'une des revendications 12 à 13, **caractérisé en ce que**, lors du montage de deux panneaux (1, 2) l'un sur l'autre , la branche (16) de la zone longitudinale chevauchée dépasse dans l'angle entre la branche (13) et la saillie (14), l'angle entre la branche (16) et le coude (15) s'appuyant sur l'angle entre la branche (13) et la zone de précontrainte (12), les deux coudes (11, 15) s'appuyant l'un sur l'autre et un espace (22) subsistant entre la zone de précontrainte (12) et le coude (15).
